# EUROPEAN PATENT APPLICATION

(11) **EP 1 553 783 A2**
(43) Date of publication of application: **13.07.2005**
(21) Application number: 05250019.6
(22) Date of filing: 05.01.2005
(51) Int. Cl.: H04N 7/36

(54) **Prediction encoding apparatus, prediction encoding method, and computer readable recording medium thereof**

(30) Priority: 06.01.2004 KR 2004000572
(71) Applicant: Samsung Electronics Co., Ltd., Suwon-si, Gyeonggi-do (KR)
(72) Inventor: Yoo, Ki-won, Songpa-gu, Seoul (KR); Kim, Hyung-ho, Gwanak-gu, Seoul (KR)
(74) Representative: Robinson, Ian Michael

(57) **Abstract**

A prediction encoding apparatus, a prediction encoding method, and a computer readable recording medium having embodied thereon a program for performing the prediction encoding method. The prediction encoding apparatus includes a prediction encoding unit (10-40) which performs prediction encoding of an original block based on minimal operations obtained by removing repeated operations in a calculation of prediction pixels for each of nine intra 4x4 prediction modes for a luminance signal.

## Description

The present invention relates to prediction coding, and more particularly, to a prediction encoding apparatus, a prediction encoding method, and a computer readable recording medium having embodied thereon a computer program for performing the prediction encoding method.

H.264/advanced video coding (AVC) is a new video coding standard being prepared by International Telecommunication Unit - Telecommunication (ITU-T) and International Standards Organization (ISO), and is designed for higher coding efficiency and improvement in network adaptability of a bitstream. Streaming video via the Internet, wireless video, digital satellite, digital cable, DVD TV systems, video conference with a low bandwidth, and the like are applications that are difficult to implement in H.263 video, a presently adopted ITU-T and ISO coding standard. However, with improved compression rate performance in H.264, those applications will provide better quality at a lower cost and, in addition, new applications are expected to be produced with H.264. At present, H.264/AVC is adopted as a domestic digital multimedia broadcasting (DMB) specification, and application apparatuses including digital camcorders and digital televisions (D-TV) using H.264/AVC are being developed and prepared. In China, H.264/AVC is a candidate for that country's own digital broadcasting specifications. Accordingly, H.264/AVC is expected to have a great influence in the future.

An H.264/AVC intra prediction process is a method for prediction coding of a block in a frame by using only information in an identical frame. The method includes four 16x16 prediction modes and nine 4x4 prediction modes for a luminance signal, and four 8x8 prediction modes for a chrominance signal.

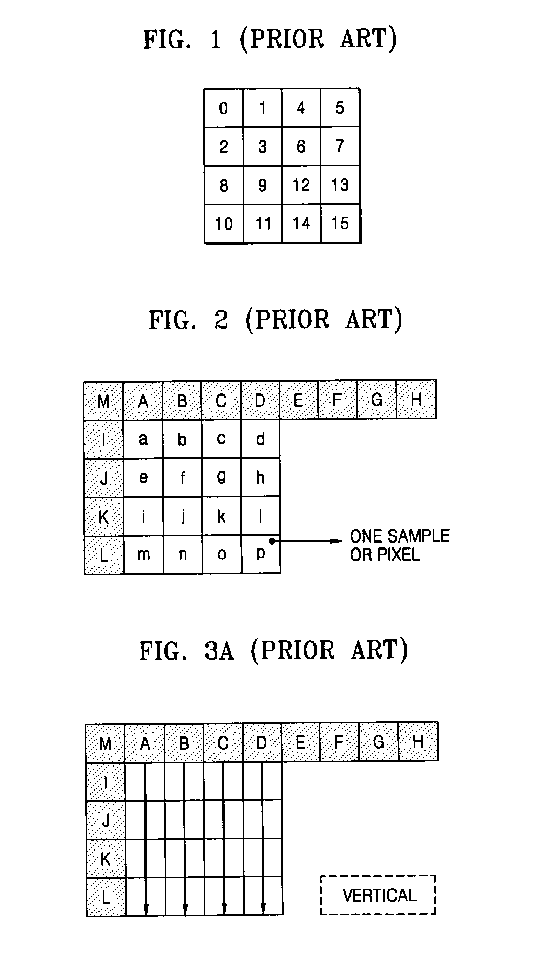

Figure 1 is a diagram showing a macroblock used in an intra 4x4 prediction process according to related art.

Referring to Figure 1, in intra 4x4 prediction mode, a 16x16 macroblock is divided into 16 4x4 blocks. Accordingly, each block is the size of 4x4 pixels and the number in a block indicates a block index defined in the H.264 standard.

Figure 2 is a diagram showing adjacent pixels used in deriving a prediction block in an intra 4x4 block according to the related art.

Referring to Figure 2, small letters a through p denote pixels corresponding to respective 4x4 blocks that are the objects of the prediction. Samples expressed by capital letters A through M above and to the left of 4x4 blocks formed with a through p denote adjacent pixels needed in prediction of 4x4 blocks.

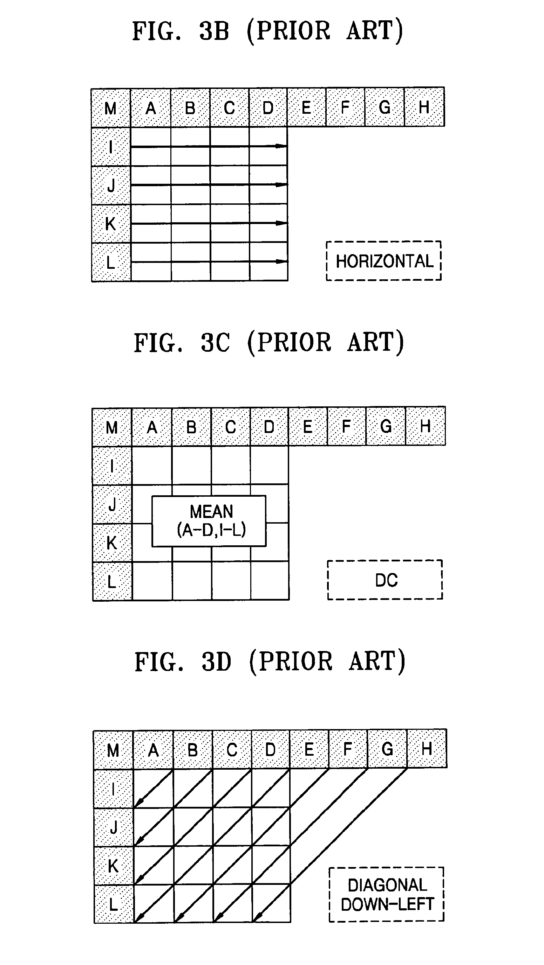

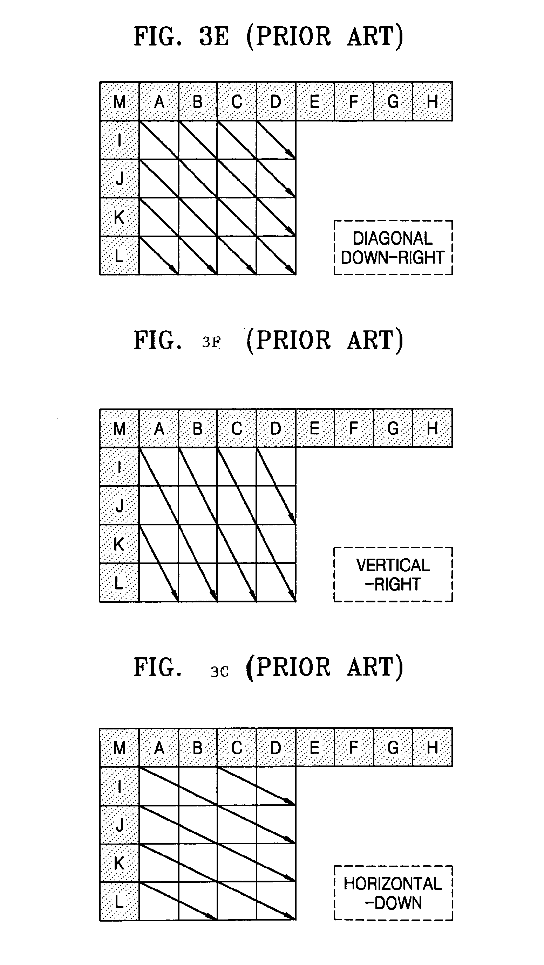

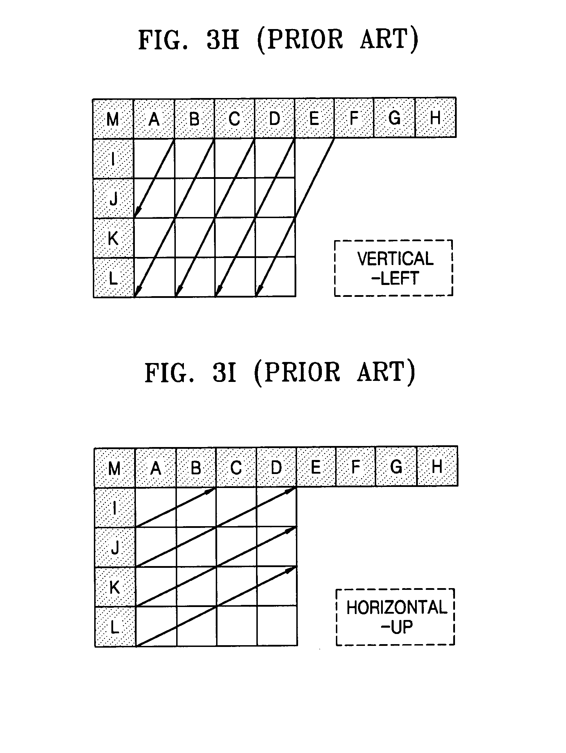

Figures 3a through 3i are diagrams showing intra 4x4 prediction modes according to the related art.

Referring to Figures 3a through 3i, there are total 9 selective prediction modes for 4x4 luminance blocks. Figures 3a through 3i show vertical mode, horizontal mode, DC mode, diagonal down-left mode, diagonal down-right mode, vertical-right mode, horizontal-down mode, vertical-left mode, and horizontal-up mode, respectively.

In each mode, arrows indicate the direction in which prediction pixels are derived.

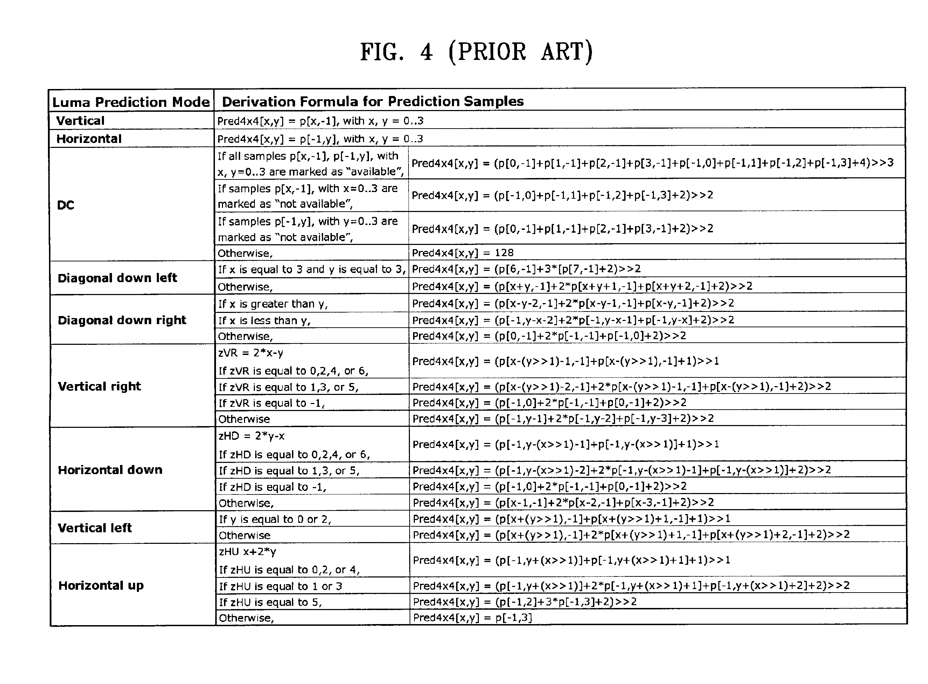

Figure 4 is a diagram showing formulas of prediction pixels using adjacent pixels needed in intra 4x4 prediction mode according to the related art.

In the notation method, p[0,0] denotes a data item on the first row and first column of a 4x4 block, and p[3,3] denotes a data item on the fourth row and fourth column, and each sample of a prediction block for a 4x4 block is expressed by Pred4x4[x,y].

Adjacent pixels above and to the left of the 4x4 block are expressed as the following:
A = p[0,-1], B = p[1,-1], C = p[2,-1], D = p[3,-1], E = p[4,-1], F = p[5,-1], G = p[6,-1], H = p[7,-1], I = p[-1,0], J = p[-1,1], K = p[-1,2], L = p[-1,3], M = p[-1,-1].

Formulas expressed by this notation method and needed in each of 9 prediction modes are as shown in Figure 4. Prediction samples from diagonal down left prediction mode to horizontal up prediction mode are generated from weighted averages of prediction samples A through M.

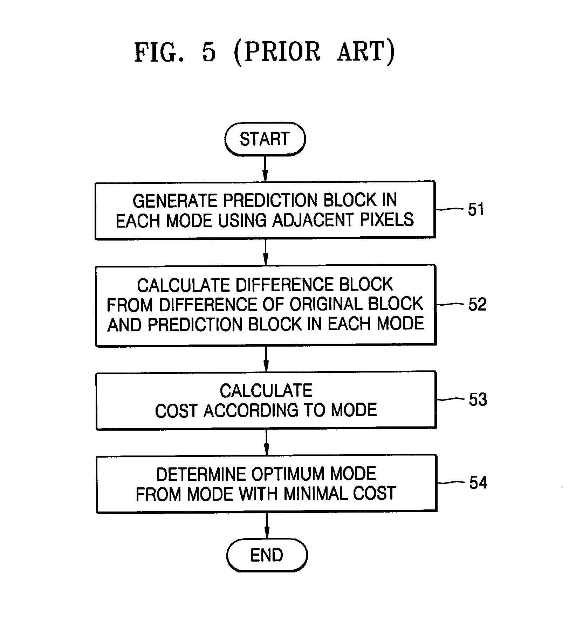

Figure 5 is a flowchart of the steps performed by an encoding process of intra 4x4 prediction according to related art.

Referring to Figure 5, first, a prediction block is generated by using adjacent pixels in each mode in step 51. That is, by applying the formulas as shown in Figure 4, to each of the nine prediction modes used in intra 4x4 block prediction, 9 prediction blocks are generated.

Next, the difference of the original block that is the object of prediction and the calculated prediction block is obtained and the difference block according to each mode is calculated in step 52.

Next, the cost is calculated from the difference block according to each mode in step 53. At this time, the cost is obtained as the sum of the absolute values of all pixels of a 4x4 difference block.

Next, an optimum mode is determined by selecting a mode having a minimum cost among the costs calculated according to each mode in step 54. Thus determined mode is the intra 4x4 mode of the original block.

This process is repeated for 4x4 blocks in a macroblock.

As shown in Figure 4, in the calculation process for prediction pixels in each mode, there are many repeated calculations within a mode or between modes. However, in the prediction encoding process according to related art as described above, a prediction block is generated in each mode for an original block and therefore, when a prediction block is generated, common operations are also be performed repeatedly for each mode. Accordingly, hardware resources needed in a prediction encoding apparatus are wasted and the speed of prediction coding is lowered.

According to the present invention there is provided an apparatus and method as set forth in the appended claims. Preferred features of the invention will be apparent from the dependent claims, and the description which follows.

An aspect of the present invention provides a prediction encoding apparatus and a prediction encoding method to save hardware needed in prediction encoding and to increase the speed of prediction encoding, and a computer readable recording medium having embodied thereon a computer program for performing the prediction encoding method.

According to an aspect of the present invention, there is provided a prediction encoding apparatus and method, by which only the minimal operation result needed in prediction, in which repeated operations in each mode are removed without generating prediction blocks in intra 4x4 prediction encoding, and combination of original blocks that are the object of the prediction are used to calculate the cost of each mode and an optimum prediction mode is determined, and a computer readable recording medium having embodied thereon a computer program for performing the prediction encoding method.

According to an aspect of the present invention, there is provided a prediction encoding apparatus comprising: a prediction encoding unit which performs prediction encoding of an original block based on minimal operations obtained by removing repeated operations in a calculation of prediction pixels for each of nine intra 4x4 prediction modes for a luminance signal.

In the prediction encoding apparatus, in the minimal operations, the prediction encoding unit may use pixels newly defined among adjacent pixels of the original block.

Each pixel value of the newly defined pixels may be expressible by the sum of one pixel value and an adjacent pixel value.

The prediction encoding unit may include: a minimal operation performing unit which performs the minimal operations; a difference block calculation unit which calculates a difference from the original block for each prediction mode by using the minimal operations; a cost calculation unit which calculates a cost of a difference block calculated for each prediction mode; and a mode determination unit which determines a prediction mode with a minimal cost among the costs calculated for the respective prediction modes.

The minimal operation performing unit may perform minimal operations obtained by removing repeated operations in the prediction mode, or may perform minimal operations obtained by removing repeated operations among the prediction modes, or may perform minimal operations obtained by removing repeated operations in the prediction mode and among the prediction modes.

The minimal operation performing unit may use pixels newly defined among adjacent pixels of the original block.

According to another aspect of the present invention, there is provided a prediction encoding method comprising: performing prediction encoding of an original block based on minimal operations obtained by removing repeated operations in a calculation of prediction pixels for each of nine intra 4x4 prediction modes for a luminance signal.

According to still another aspect of the present invention, there is provided a computer readable recording medium having embodied thereon a computer program for a prediction encoding method, wherein the prediction encoding method comprises: performing prediction encoding of an original block based on minimal operations obtained by removing repeated operations in a calculation of prediction pixels for each of nine intra 4x4 prediction modes for a luminance signal.

According to another aspect of the present invention, there is provided an intra prediction encoding apparatus, including: a minimal operation performing unit which performs minimal operations using pixel values of an original block of pixels; a difference block calculation unit which calculates a difference block of pixels for each of plural prediction modes based on the performed minimal operations and pixel values of the original block; a cost calculation unit which calculates a cost of each of the plural prediction modes, the cost being a sum of absolute values of pixel values of difference pixels included in each difference block; and a mode determination unit determines a prediction mode based on the cost of each of the plural prediction modes.

According to another aspect of the present invention, there is provided a method of improving a speed of intra prediction encoding, including: generating a set of results of minimal operations on pixel values of an original block of pixels, the minimal operations being commonly used to generate plural prediction blocks; and calculating a prediction block of pixels based on the original block of pixels and the results of minimal operations.

Additional and/or other aspects and advantages of the present invention will be set forth in part in the description which follows and, in part, will be obvious from the description, or may be learned by practice of the invention.

These and/or other aspects and advantages of the present invention will become apparent and more readily appreciated from the following detailed description, taken in conjunction with the accompanying drawings of which:
Figure 1 is a diagram to explain a macroblock used in an intra 4x4 prediction process according to related art;
Figure 2 is a diagram to explain adjacent pixels used in deriving a prediction block in an intra 4x4 block according to the related art of Figure 1;
Figures 3a through 3i are diagrams to explain intra 4x4 prediction modes according to the related art of Figure 1;
Figure 4 is a diagram showing formulas of prediction pixels using adjacent pixels needed in intra 4x4 prediction mode according to the related art of Figure 1;
Figure 5 is a flowchart of the steps performed by an encoding process of intra 4x4 prediction according to the related art of Figures 1-4;
Figures 6a through 6k are diagrams illustrate the concept of intra 4x4 prediction encoding according to an embodiment of the present invention;
Figure 7 is a diagram illustrating the concept of intra 4x4 prediction encoding according to an embodiment of the present invention;
Figure 8 is a diagram showing operations using adjacent pixels needed in intra 4x4 prediction encoding according to an embodiment of the present invention;
Figure 9 is a diagram to explain minimal operations needed according to the minimal formulas shown in Figure 8;
Figure 10 is a diagram to explain calculation of an intermediate value of adjacent pixels needed in intra 4x4 prediction encoding according to an embodiment of the present invention;
Figure 11 is a diagram to explain minimal operations needed according to the minimal formulas shown in Figure 10;
Figure 12 is a block diagram of the structure of an intra 4x4 prediction encoding apparatus according to an embodiment of the present invention;
Figure 13 is a flowchart of the steps performed by an intra 4x4 prediction encoding method according to an embodiment of the present invention; and
Figure 14 is a table comparing the numbers of adders and shifters in related art 4x4 intra prediction encoding method and the prediction encoding method according to an embodiment of the present invention when hardware for H.264 encoder/decoder is implemented.

Reference will now be made in detail to an embodiment of the present invention, examples of which are illustrated in the accompanying drawings, wherein like reference numerals refer to the like elements throughout. The embodiment is described below in order to explain the present invention by referring to the figures.

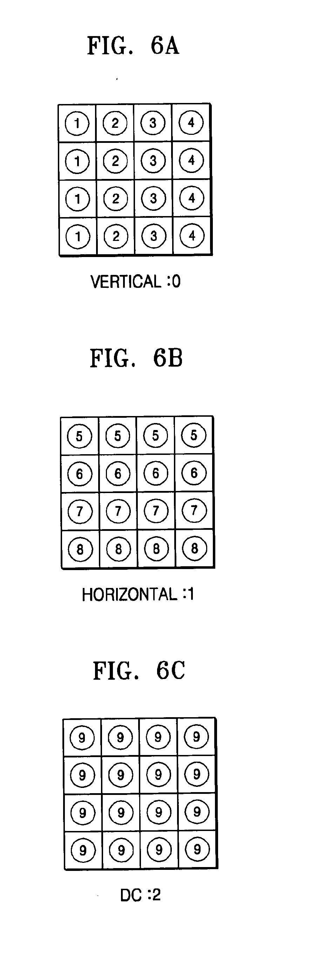

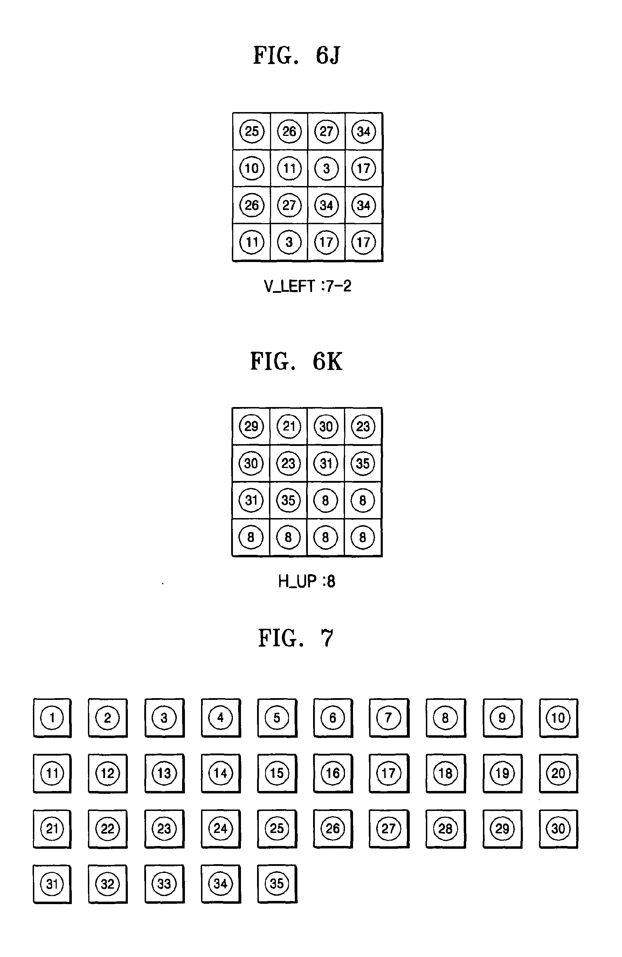

Figures 6a through 6k are diagrams showing the concept of intra 4x4 prediction encoding according to an embodiment of the present invention. In Figures 6a through 6k, the types of operations needed in generating prediction pixels forming prediction blocks according to respective prediction modes are shown.

Referring to Figure 6a, in order to generate a prediction block according to a vertical mode, operations, 1-4, are used four times each.

Referring to Figure 6b, in order to generate a prediction block according to a horizontal mode, operations, 5-8, are used four times each.

Referring to Figure 6c, in order to generate a prediction block according to a DC mode, operation 9 is used 16 times.

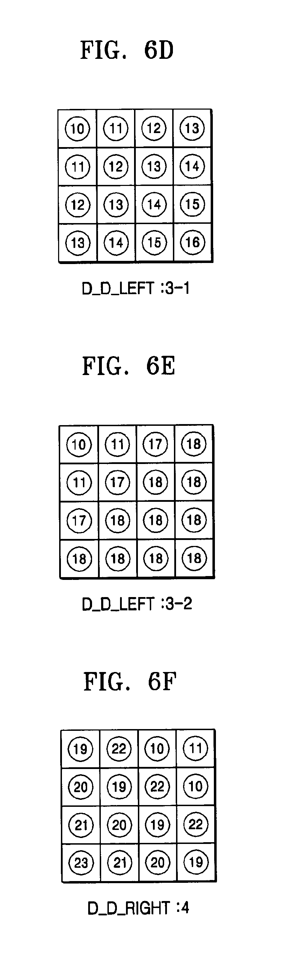

Referring to Figure 6d, in order to generate a prediction block according to a diagonal down left mode, first, operation 10 is used once, operation 11 is used twice, operation 12 is used three times, operation 13 is used four times, operation 14 is used three times, operation 15 is used twice, and operation 16 is used once.

Referring to Figure 6e, in order to generate a prediction block according to a diagonal down left mode, secondly, operation 10 is used once, operation 11 is used twice, operation 17 is used three times, and operation 18 is used ten times.

Referring to Figure 6f, in order to generate a prediction block according to a diagonal down right mode, operation 10 is used once, operation 1o1 is used once, operation 19 is used four times, operation 20 is used three times, operation 21 is used twice, operation 22 is used three times, and operation 23 is used once.

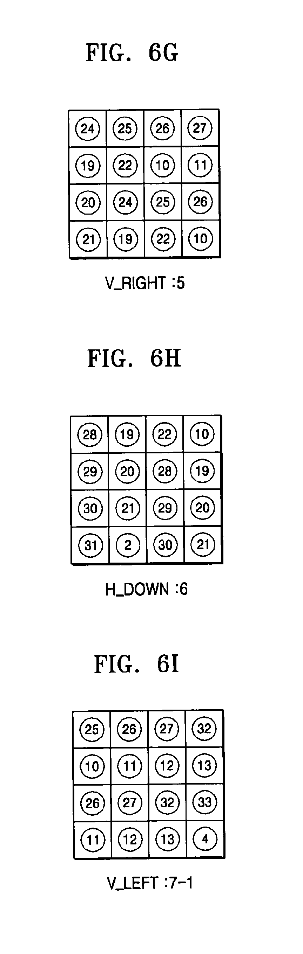

Referring to Figure 6g, in order to generate a prediction block according to a vertical right mode, operation 10 is used once, operation 11 is used once, operation 19 is used once, operation 20 is used once, operation 21 is used once, operation 22 is used twice, operation 24 is used twice, operation 25 is used twice, operation 26 is used twice, and operation 27 is used once.

Referring to Figure 6h, in order to generate a prediction block according to a horizontal down mode, operation 2 is used once, operation 10 is used once, operation 19 is used twice, operation 20 is used twice, operation 21 is used twice, operation 22 is used once, operation 28 is used twice, operation 29 is used twice, operation 30 is used twice, and operation 31 is used once.

Referring to Figure 6i, in order to generate a prediction block according to a vertical left mode, first, operation 4 is used once, operation 10 is used once, operation 1o1 is used twice, operation 12 is used twice, operation 13 is used twice, operation 25 is used once, operation 26 is used twice, operation 27 is used twice, operation 32 is used twice, and operation 33 is used once.

Referring to Figure 6j, in order to generate a prediction block according to a vertical left mode, secondly, operation 3 is used twice, operation 10 is used once, operation 11 is used twice, operation 17 is used three times, operation 25 is used once, operation 26 is used twice, operation 27 is used twice, and operation 34 is used three times.

Referring to Figure 6k, in order to generate a prediction block according to a horizontal up mode, operation 8 is used six times, operation 24 is used once, operation 23 is used twice, operation 29 is used once, operation 30 is used twice, operation 31 is used twice, and operation 35 is used twice.

The operations used for prediction blocks according to respective prediction modes as described above show that an operation for generating one prediction pixel can be used many times for other prediction pixels in the same prediction block or for prediction pixels in other prediction blocks. That is, referring to Figure 6a, four operations are used for 16 prediction pixels forming a prediction block according to vertical mode, and accordingly, if only the four operations are performed, the already performed operations can be taken and directly used for the remaining 12 pixels. In addition, referring to Figure 6f, for operations 10 and 11 used in diagonal down right mode, those operations used in diagonal down left mode can be directly used.

Thus, if common operations in one prediction block or among two or more prediction blocks are extracted, it can be seen that 35 operations are used, including operations 1-35. Accordingly, an embodiment of the present invention takes advantage of the fact that common operations are many times repeatedly used and therefore, a prediction block according to each prediction mode does not need to be generated and without generating prediction blocks, only calculations for minimal operations commonly used to generate prediction blocks are performed and thus a calculated set of minimal operations can be used for calculation of a difference block.

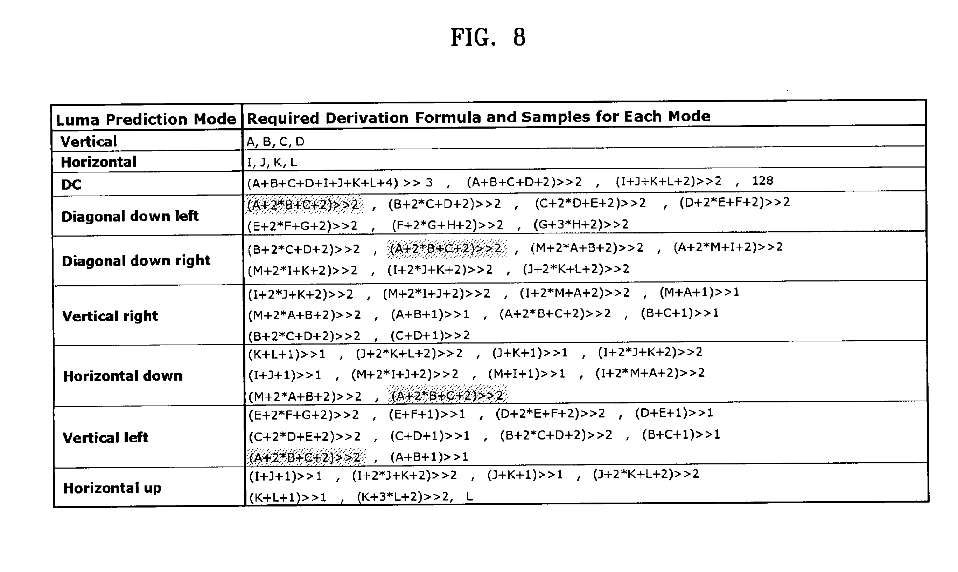

Figure 8 is a diagram showing operations using adjacent pixels needed in intra 4x4 prediction encoding in order to apply the present embodiment.

The operations shown in Figure 8 are the formulas shown in Figure 4 expressed by using adjacent pixels A through M, and show formulas needed in calculation of actual prediction pixels for each mode.

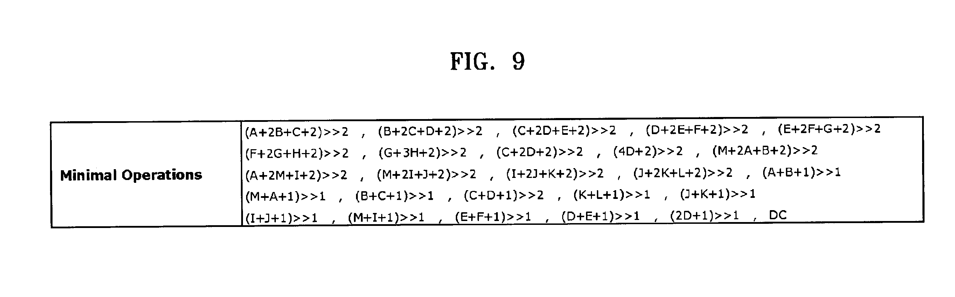

In operations shown in Figure 8, there are repeated operations among respective modes. For example, (A+2*B+C+2)>>2 of diagonal down left mode is also in diagonal down right mode, vertical right mode, horizontal down mode, and vertical left mode. If these operations are calculated in advance before the prediction process begins, repeated calculation can be avoided. Thus, minimal operations needed in calculation of prediction pixels and obtained by removing repeated operations existing in a prediction mode and among prediction modes are shown in FIG 9.

Figure 9 is a diagram showing minimal operations needed according to the minimal formulas shown in Figure 8. It can be seen that total 26 operations are included in the set of minimal operations.

In addition, in the minimal operations shown in Figure 8, there are partial operations repeated among respective operations. For example, (A+2B+C+2)>>2 and (B+2C+D+2) >>2 of diagonal down left mode can be expressed differently as (A+B+B+C+2)>>2 and (B+C+C+D+2) >>2, respectively.

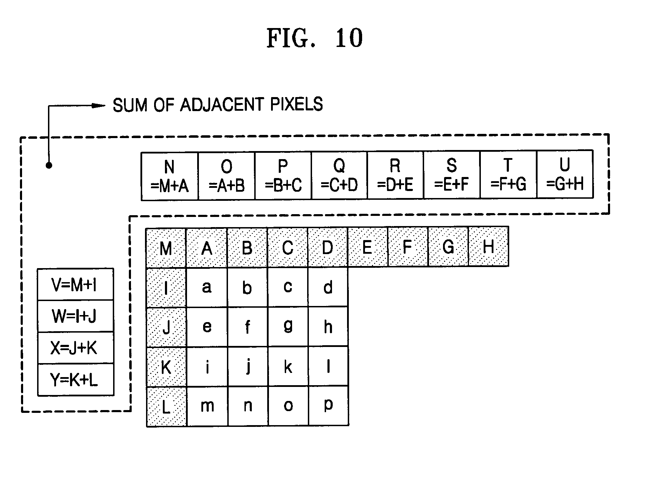

At this time, if (B+C) is calculated in advance, an operation used in addition can be reduced. Also, in other prediction pixel calculation processes there are many cases where such an operation as (B+C) can be used. Another characteristic of present embodiment of the present invention is that it takes advantage of the fact that partial operations are repeated even in these minimal operations, and by defining additional adjacent pixels among adjacent pixels, duplication is removed. Additional adjacent pixels newly defined by using adjacent pixels thus are shown in Figure 10.

Figure 10 is a diagram showing calculation of the sum of adjacent pixels needed in intra 4x4 prediction encoding according to an embodiment of the present invention.

Referring to Figure 10, in addition to pixels A through M that are located above and to the left of a 4x4 block, N through Y that are additionally defined by using the pixels A through M are shown.

Pixels N through M that are additionally defined as follows:
N is the sum of pixel M and its adjacent pixel A; O is the sum of pixel A and its adjacent pixel B; P is the sum of pixel B and its adjacent pixel C; Q is the sum of pixel C and its adjacent pixel D; R is the sum of pixel D and its adjacent pixel E; S is the sum of pixel E and its adjacent pixel F; T is the sum of pixel F and its adjacent pixel G; U is the sum of pixel G and its adjacent pixel H; V is the sum of pixel M and its adjacent pixel I; W is the sum of pixel I and its adjacent pixel J; X is the sum of pixel J and its adjacent pixel K; and Y is the sum of pixel K and its adjacent pixel L.

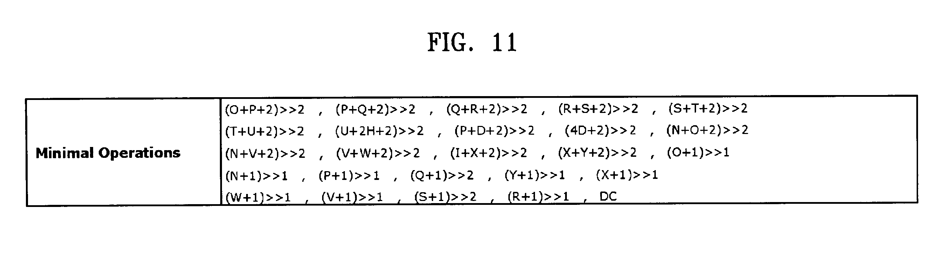

Thus, a set of minimal operations obtained by removing repeated operations by using additionally newly defined prediction pixels is shown in Figure 11.

Figure 11 shows minimal operations needed according to the minimal formulas shown in Figure 10. Compared to the set of minimal operations shown in Figure 9, it can be seen that the number of additions in the operations shown in Figure 11 is greatly decreased.

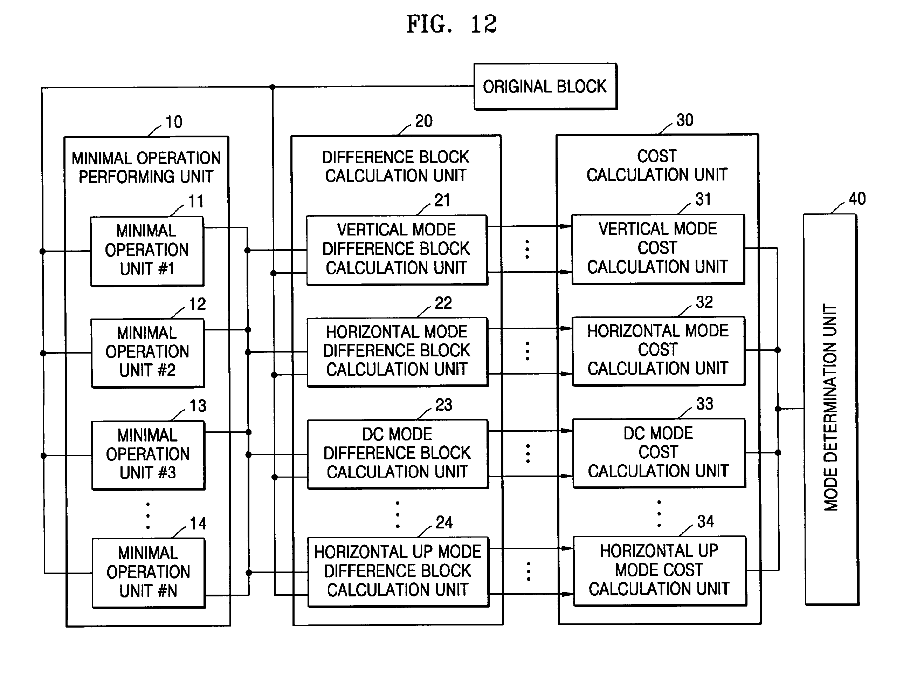

Figure 12 is a block diagram of the structure of an intra 4x4 prediction encoding apparatus according to an embodiment of the present invention.

Referring to Figure 12, the prediction encoding apparatus includes a minimal operation performing unit 10, a difference block calculation unit 20, a cost calculation unit 30 and a mode determination unit 40.

The minimal operation performing unit 10 performs minimal operations included in the set of minimal operations according to the present embodiment by using pixel values of the original block 1 that is the object of the prediction. The minimal operation performing unit 10 includes minimal operation unit #1 11, #2 12, #3 13 through minimal operation unit #N 14. Each of N minimal operation units, minimal operation unit #1 11 through minimal operation unit #N 14, performs a minimal operation included in the set of minimal operations needed in calculation of prediction pixels. Here, N is determined according to which optimization is performed as shown below.

The minimal operation performing unit 10 may perform minimal operations included in a set of minimal operations obtained by removing repeated operations in a prediction mode: for optimization in a prediction mode (intra mode), for optimization among prediction modes (inter mode), or for optimization in a prediction mode and among prediction modes (intra and inter mode).

In addition, the minimal operation performing unit 10 may perform minimal operations included in a set of minimal operations obtained by removing repeated operations in a prediction mode: for optimization in a mode by using newly defined sum pixels as described above, for optimization among prediction modes by using newly defined sum pixels, or for optimization in a mode and among modes by using newly defined sum pixels.

Among the above-described examples, the number of operations included in the set of minimal operations of the sixth example of performing optimization in a mode and among modes by using newly defined sum pixels will be the smallest one. For example, if the minimal operation performing unit 10 performs minimal operations according to the sixth embodiment of the present invention as shown in Figure 11, the minimal operation performing unit 10 will include 25 minimal operation units. Operation units for calculating newly defined pixels are not included here.

The difference block calculation unit 20 calculates a difference block for each of nine prediction modes based on the minimal operation result output from the minimal operation performing unit 10 and pixel values of the original block.

The difference block calculation unit 20 includes a vertical mode difference block calculation unit 21, a horizontal mode difference block calculation unit 22, a DC mode difference block calculation unit 23, and a horizontal up mode difference block calculation unit 24.

The vertical mode difference block calculation unit 21 calculates a difference block for vertical prediction mode, the horizontal mode difference block calculation unit 22 calculates a difference block for horizontal prediction mode, the DC mode difference block calculation unit 23 calculates a difference block for DC mode, and a horizontal up mode difference block calculation unit 24 calculates a difference block for horizontal up prediction mode.

In particular, the difference block calculation unit according to the present embodiment calculates a difference block, not based on an original block and a prediction block, but based on an original block and the result of minimal operations used in a prediction block. Thus, without generating all prediction blocks for which identical operations are repeatedly performed, only minimal operations used in prediction blocks are calculated and the calculation results are directly used in calculating a difference block. Accordingly, performing repeated operations can be avoided such that the effect can be improved from the aspects of speed and hardware capacity.

For example, the vertical mode difference block calculation unit 21 calculates a difference block for vertical prediction mode, the horizontal mode difference block calculation unit 22 calculates a difference block for horizontal prediction mode, the DC mode difference block calculation unit 23 calculates a difference block for DC mode, and a horizontal up mode difference block calculation unit 24 calculates a difference block for horizontal up prediction mode.

For example, the diagonal down left mode difference block calculation unit calculates a difference block based on an original block and operations used in calculation of diagonal down left prediction mode, (A+2B+C+2)>>2, (B+2C+D+2)>>2, (C+2D+E+2)>>2, (D+2E+F+2)>>2, (E+2F+G+2)>>2, (F+2G+H+2)>>2, and (G+3H+2)>>2. The operations used in calculation of the prediction mode can be put as A+B+B+C+2) >>2, (B+C+C+D+2) >>2, (C+D+D+E+2)>>2, (D+E+E+F+2)>>2, (E+F+F+G+2)>>2, (F+G+G+H+2)>>2, and (G+H+2H+2)>>2, respectively. According to the sixth embodiment of the present invention, these can be expressed as (O+P+2)>>2, (P+Q+2) >>2, (Q+R+2) >>2, (R+S+2)>>2, (S+T+2)>>2, (T+U+2)>>2, and (U+2H+2)>>2. Accordingly, these 7 calculation results are taken from the minimal operation performing unit 10 and by calculating differences of the calculation results and pixel values of an original block, a difference block is generated.

The cost calculation unit 30 receives a difference block output from the difference block calculation unit 20 and calculates the cost of each of 9 prediction modes.

The cost calculation unit 30 comprises a vertical mode cost calculation unit 31, a horizontal mode cost calculation unit 32, a DC mode cost calculation unit 33, and a horizontal up mode cost calculation unit 34.

A cost is the sum of absolute values of pixel values of difference pixels included in each difference block. The mode cost calculation unit calculates the sum of absolute values of pixel values of the difference block according to each mode.

The mode determination unit 40 receives cost data for each mode from the cost calculation unit 40 and determines a prediction mode with a minimal cost as an optimum mode.

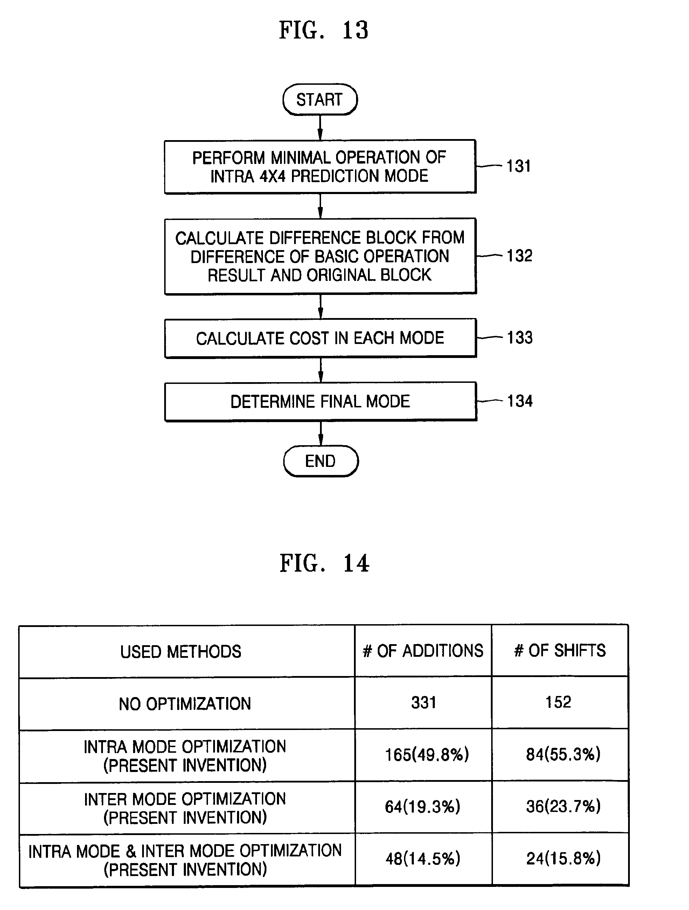

Figure 13 is a flowchart of the operations performed by an intra 4x4 prediction encoding method according to the present embodiment.

First, the minimum operation performing unit 10 of the prediction encoding apparatus performs minimal operations of intra 4x4 prediction modes in operation 131. Minimal operation units of the minimal operation performing unit 10 calculate respective operations included in the minimal operation set.

Next, a difference block is calculated from the difference of the result of basic operations and an original block in operation 132. The difference block calculation unit 20 calculates a difference block for each prediction mode, from the operation results performed in the minimal operation performing unit 10 and an original block. Each mode difference block calculation unit included in the difference block calculation unit 20 selectively takes operations needed in the corresponding mode, from the minimal operation performing unit 10, and uses the operations in calculating the difference block.

Next, the cost for each mode is calculated in operation 133. The cost calculation unit 30 calculates the costs of difference blocks according to respective prediction modes received from the difference block calculation unit 20.

Next, the mode determination unit 40 determines a mode with a minimal cost among the costs calculated for respective prediction modes, as a final mode in operation 134.

At least the prediction encoding method as described above may be embodied in a code, which can be read by a computer, on a computer readable recording medium. The computer readable recording medium includes various kinds of recording apparatuses on which computer readable data are stored such as ROMs, RAMs, CD-ROMs, magnetic tapes, hard disks, floppy disks, flash memories, and optical data storage devices. Also, it may be implemented in the form of a carrier wave (for example, transmitted over the Internet). Also, the computer readable recording media can be scattered on computer systems connected through a network and can store and execute a computer readable code in a distributed mode.

According to the structure of the above-described embodiment of the present invention, without generating prediction blocks according to 9 prediction modes for an original block, only minimal operations needed in generating prediction blocks are calculated and by using the result in calculating a difference block, hardware needed in prediction encoding can be saved and the speed of prediction encoding can be increased without increasing the complexity of hardware implementation.

Figure 14 is a table comparing the numbers of adders and shifters in related art 4x4 intra prediction encoding method and the prediction encoding method according to the above-described embodiment of the present invention when hardware for H.264 encoder/decoder is implemented.

Referring to Figure 14, 331 adders and 152 shifters are needed in related art prediction encoding method that does not use optimization. However, 165 adders and 84 shifters are used according to the optimization method of the above-described embodiment of the present invention, 64 adders and 36 shifters are used according to the optimization method among modes of the above-described embodiment of the present invention, and 48 adders and 24 shifters are used according to the optimization method in a mode and among modes of the above-described embodiment of the present invention. Accordingly, the optimization method in a mode and among modes according to the described embodiment of the present invention can reduce operations needed in a prediction process by 85% of that of related art at maximum.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A prediction encoding apparatus comprising:
a prediction encoding unit (10-40) which performs prediction encoding of an original block based on minimal operations obtained by removing repeated operations in a calculation of prediction pixels for each of nine intra 4x4 prediction modes for a luminance signal.

2. The prediction encoding apparatus of claim 1, wherein the prediction encoding unit (10-40) uses pixels newly defined between adjacent pixels of the original block in the minimal operations.

3. The prediction encoding apparatus of claim 1 or 2, wherein each pixel value of the newly defined pixels is expressible by the sum of one pixel value and an adjacent pixel value.

4. The prediction encoding apparatus of claim 1, 2 or 3, wherein the prediction encoding unit (10-40) includes:
a minimal operation performing unit (10) which performs the minimal operations;
a difference block calculation unit (20) which calculates a difference from the original block for each prediction mode by using the minimal operations;
a cost calculation unit (30) which calculates a cost of a difference block calculated for each prediction mode; and
a mode determination unit (40) which determines a prediction mode with a minimal cost among the costs calculated for the respective prediction modes.

5. The prediction encoding apparatus of claim 4, wherein the minimal operation performing unit (10) performs minimal operations by removing repeated operations in one of the prediction modes.

6. The prediction encoding apparatus of claim 4, wherein the minimal operation performing unit (10) performs minimal operations by removing repeated operations among all of the prediction modes.

7. The prediction encoding apparatus of claim 4, wherein the minimal operation performing unit (10) performs minimal operations by removing repeated operations in the prediction mode and among the prediction modes.

8. The prediction encoding apparatus of claim 7, wherein, the minimal operation performing unit (10) uses pixels newly defined among adjacent pixels of the original block.

9. A prediction encoding method comprising:
performing prediction encoding of an original block based on minimal operations obtained by removing repeated operations in a calculation of prediction pixels for each of nine intra 4x4 prediction modes for a luminance signal.

10. The prediction encoding method of claim 9, wherein the minimal operations are obtained by using pixels newly defined among adjacent pixels of the original block.

11. The prediction encoding method of claim 10, wherein each pixel value of the newly defined pixels is expressible by the sum of one pixel value and an adjacent pixel value.

12. The prediction encoding method of claim 9, 10 or 11, wherein the performing prediction encoding includes:
performing the minimal operations for each prediction mode;
calculating a difference from the original block for each prediction mode by using the performed minimal operations and generating a difference block for each prediction mode;
calculating a cost of the generated difference block for each prediction mode; and
determining a prediction mode of a difference block with a minimal cost among the costs of difference blocks calculated for respective prediction modes.

13. The prediction encoding method of claim 12, wherein the performing minimal operations includes performing minimal operations by removing repeated operations in one of the prediction modes.

14. The prediction encoding method of claim 12, wherein the performing minimal operations includes performing minimal operations by removing repeated operations among all of the prediction modes.

15. The prediction encoding method of claim 12, wherein the performing minimal operations performing minimal operations by removing repeated operations in the prediction mode and among the prediction modes.

16. The prediction encoding method of claim 15, wherein the performing minimal operations in the prediction mode or among the prediction modes includes using pixels newly defined among adjacent pixels of the original block in the minimal operations.

17. A computer-readable storage medium encoded with processing instructions for causing a processor to perform a prediction encoding method, the method comprising:
performing prediction encoding of an original block based on minimal operations obtained by removing repeated operations in a calculation of prediction pixels for each of nine intra 4x4 prediction modes for a luminance signal.

18. An intra prediction encoding apparatus, comprising:
a minimal operation performing unit (10) which performs minimal operations using pixel values of an original block of pixels;
a difference block calculation unit (20) which calculates a difference block of pixels for each of plural prediction modes based on the performed minimal operations and pixel values of the original block;
a cost calculation unit (30) which calculates a cost of each of the plural prediction modes, the cost being a sum of absolute values of pixel values of difference pixels included in each difference block; and
a mode determination unit (40) determines a prediction mode based on the cost of each of the plural prediction modes.

19. The apparatus according to claim 18, wherein the determined prediction mode is an optimal prediction mode having a lowest cost among the costs of the prediction modes.

20. The apparatus according to claim 18, wherein the minimal operations are performed by removing repeated operations: in a mode for optimization in a prediction mode (intra mode); in a mode for optimization among prediction modes (inter mode); in a prediction mode and among prediction modes (intra and inter mode); in a mode for optimization in a mode by using newly defined sum pixels as described above, among prediction modes using newly defined sum pixels, or in a mode for optimization in a mode and among modes by using newly defined sum pixels.

21. A method of improving a speed of intra prediction encoding, comprising:
generating a set of results of minimal operations on pixel values of an original block of pixels, the minimal operations being commonly used to generate plural prediction blocks; and
calculating a prediction block of pixels based on the original block of pixels and the results of minimal operations.
